# EUROPEAN PATENT APPLICATION

(11) **EP 1 133 171 A2**
(43) Date of publication of application: **12.09.2001**
(21) Application number: 01301972.4
(22) Date of filing: 05.03.2001
(51) Int. Cl.: H04N 5/44

(54) **Multi-media receiver**

(30) Priority: 06.03.2000 US 519174
(71) Applicant: ATI International SRL, Christ Church (BB)
(72) Inventor: Lightstone, Michael, Fremont, California 94539 (US); Eckart, Stefan, Mountain View, California 94043 (US); Webb, Richard, Cupertino, California 95014 (US); Guo, Haitao, San Jose, california 95131 (US); Yang, Xiaohua, San Jose, California 95135 (US); Ingrao, Fabio, San Francisco, California 94131 (US)
(74) Representative: Howe, Steven

(57) **Abstract**

Method and apparatus for processing multimedia data by producing a stream of encoded multimedia data (26) from a program input (24). The stream of encoded multimedia data is stored to produce stored multimedia data. The stream of encoded multimedia data is stored in a file system (15) as encoded video data (54) and encoded audio data (58). The encoded multimedia data may further include encoded closed-caption data (62), encoded parental control data (66) and encoded copy restriction, or protection, data (70). A selected portion of the stored stream of encoded multimedia data (32) is determined in accordance with one of a multiple of read operations. The selected portion is decoded to produce a decoded program (34). The decoded program may be provided to a video display and speakers for user viewing. A second selected portion of the stream of encoded multimedia data (36) is determined in accordance with a second one of the multiple read operations. The second selected portion is archived on a designated storage medium (22).

## Description

This invention relates generally to computers and more particularly to processing multi-media data as a digital VCR.

With the advent of digital video technology, many new and exciting products are available. One such product is a digital videocassette recorder (VCR), which receives an analog television broadcast, converts it into an MPEG ("Motion Picture Expert Group") digital format and stores the MPEG video. By storing the television broadcast signals in a digital format, the user may view the recorded digital images in a variety of ways, including fast forward, rewind, pause, etc.

The digital VCR allows a user to store various programs and to amass a substantial amount of video data. Such video data may span several hours of program viewing. When the user desires to watch a particular program or particular section of a program, the user inputs the particular start time that corresponds with the beginning of a program or the desired section. For example, if the user has stored programs that are broadcast via a network channel that begin at 7:00 p.m. and end at 10:00 p.m. and desires to watch the program that began at 8:30, the user would enter 8:30 p.m. as the start time.

Currently available digital VCRs, while providing many advantages, have some limitations. For instance, when the digital VCR receives a television broadcast, it can only store it as digital information and then allow it to be played back. If the user is watching a program in real-time (i.e., at the time of broadcast), there is a delay due to the digital processing and storage. Another limitation is that, if a program is to be stored, the user must have initiated the storage option prior to the program starting. If not, only the portion that is received after the storage option was initiated will be stored. For example, if the user initiates the storage option fifteen minutes into a program, the fifteen minutes will be lost. Another limitation is that current digital VCRs do not allow for storage of still images of video, nor do they allow for multiple simultaneous reads of the stored digital video data.

According to a first aspect of the present invention, a multi-media system comprises:
a multi-media stream encoding module operably coupled to receive a program input and to produce therefrom a stream of encoded multi-media data;
a memory system operably coupled to store the stream of encoded multi-media data;
a file management system operably coupled to the memory system, wherein the file management system coordinates a single write of the stream of encoded multi-media data into the file system and wherein the file management system coordinates multiple read operations of selected portions of the stream of encoded multi-media data from the file system;
a multi-media stream decoding module operably coupled to receive a selected portion of the stream of encoded multi-media data in accordance with one of the multiple read operations, wherein the multi-media stream decoding module decodes the selected portion to produce a decoded program; and
a multi-media stream archiving module operably coupled to receive a second selected portion of the stream of encoded multi-media data in accordance with a second one of the multiple read operations, wherein the multi-media stream archiving module saves the second selected portion on a designated storage medium.

According to a second aspect of the present invention, a method for processing multi-media data comprises:
a) producing a stream of encoded multi-media data from a program input;
b) storing the stream of encoded multi-media data to produce stored multi-media data;
c) determining a selected portion of the stored stream of encoded multi-media data in accordance with one of a multiple read operations of the stored multi-media data;
d) decoding the selected portion to produce a decoded program;
e) determining a second selected portion of the stream of encoded multi-media data in accordance with a second one of the multiple read operations of the stored multi-media data; and
f) archiving the second selected portion on a designated storage medium.

According to a third aspect of the present invention, an apparatus for processing multi-media data comprises:
a processing module; and
memory operably coupled to the processing module, wherein the memory includes operational instructions that cause the processing module to (a) produce a stream of encoded multi-media data from a program input; (b) store the stream of encoded multi-media data to produce stored multi-media data; (c) determine a selected portion of the stored stream of encoded multi-media data in accordance with one of a multiple read operations of the stored multi-media data; (d) decode the selected portion to produce a decoded program; (e) determine a second selected portion of the stream of encoded multi-media data in accordance with a second one of the multiple read operations of the stored multi-media data; and (f) archive the second selected portion on a designated storage medium.

The present invention will be described by way of example with reference to the accompanying drawings, in which:
Figure 1 illustrates a schematic block diagram of a digital video recorder in accordance with the present invention;
Figure 2 illustrates a schematic block diagram of a multimedia stream encoding module of Figure 1;
Figure 3 illustrates a schematic block diagram of a multimedia stream decoding module of Figure 1;
Figures 4 illustrates a functional diagram of the file system of Figure 1;
Figure 5 illustrates a schematic block diagram of an alternate digital VCR in accordance with the present invention;
Figure 6 illustrates a schematic block diagram of another alternate digital VCR in accordance with the present invention;
Figure 7 illustrates a logic diagram of a method for processing multimedia data in accordance with the present invention;
Figure 8 illustrates a logic diagram of a method for switching between live video and stored digital video in accordance with the present invention; and
Figure 9 illustrates a logic diagram of a method for maintaining the file system in accordance with the present invention.

Generally, the present invention provides a method and apparatus for processing multimedia data. Such a method and apparatus includes processing that begins by producing a stream of encoded multimedia data from a program input. Such a program input may be a television broadcast, satellite broadcast, cable broadcast, output of a VCR, DVD, etc. The processing then continues by storing the stream of encoded multimedia data to produce stored multimedia data. The stream of encoded multimedia data is stored in a file system as encoded video data and encoded audio data. The encoded multimedia data may further include encoded closed-caption data, encoded parental control data and encoded copy restriction, or protection, data. The processing then continues by determining a selected portion of the stored stream of encoded multimedia data in accordance with one of a multiple of read operations. The processing continues by decoding the selected portion to produce a decoded program. The decoded program may be provided to a video display and speakers for user viewing. The processing continues by determining a second selected portion of the stream of encoded multimedia data in accordance with a second one of the multiple read operations. The processing continues by archiving the second selected portion on a designated storage medium. For example, the designated storage medium may be a hard drive of a computer system. With such a method and apparatus, a user of a digital VCR is provided with enhanced functionality such as the ability to store still images and have multiple simultaneous reads of the stored digital video.

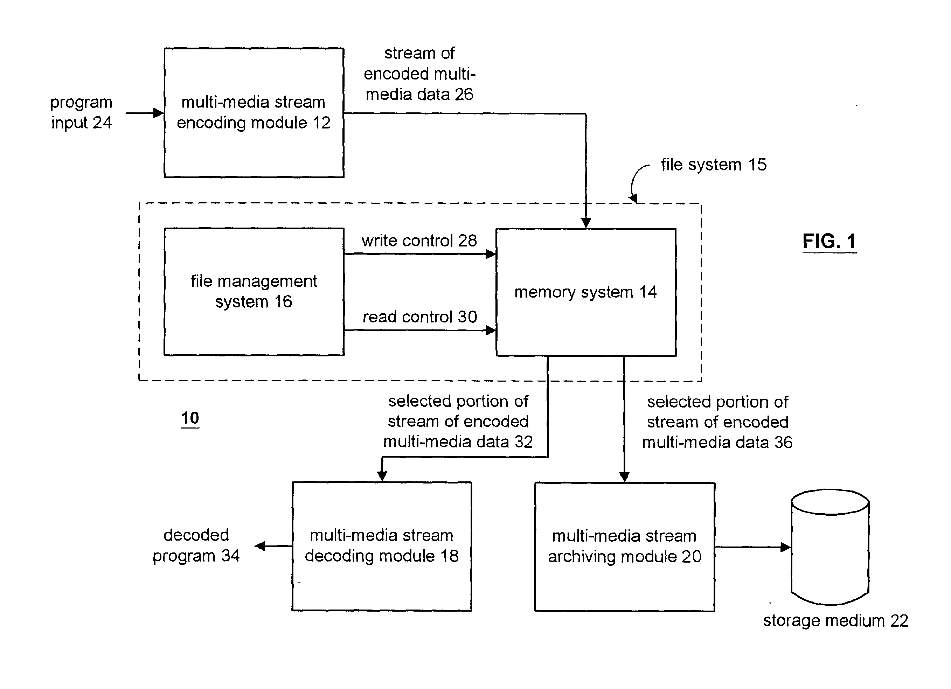

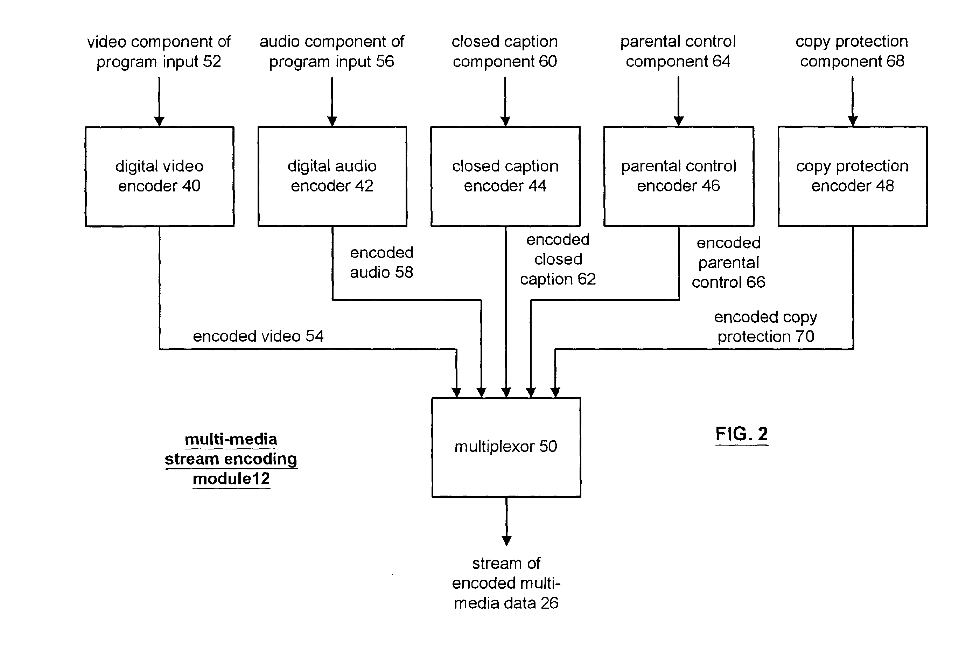

The present invention can be more fully described with reference to Figures 1 through 9. Figure 1 illustrates a schematic block diagram of a digital VCR 10 that includes a multimedia stream encoding module 12, a file system 15, a multimedia stream decoding module 18, a multimedia archiving module 20 and a storage medium 22. The file system 15 includes a file management system 16 and a memory system 14. The multimedia stream encoding module 12 is operably coupled to receive a program input 24. The program input may be originated from a television broadcast, cable broadcast, satellite broadcast, VCR output, DVD output, or any audio/video analog signal. The multimedia stream encoding module 12, which will be discussed in greater detail with reference to Figure 2, encodes the program input 24 into a stream of encoded multimedia data 26. For example, the multimedia stream encoding module 12 may convert the analog signals of the program input 24 into MPEG 2 data.

The stream of encoded multimedia data 26 is stored in the memory system 14 as directed by the file management 16. The file management 16 provides write control information 28 to the memory system 24 such that the stream of encoded multimedia data 26 is properly stored. Generally, the write control information 28 will indicate the particular memory sections of memory that the stream of data 26 is to be written into and coordinates time-stamping the information. For example, the memory system 14 may include a plurality of memory sections, each memory section being capable of storing one megabyte of information, which corresponds to approximate one to two seconds of MPEG video data. As such, each memory section may include a corresponding time stamp.

When data is to be retrieved from memory system, the file management system 16, in accordance with a user input, provides read control signals 30 to the memory section 14. Note that the file management system 16 may provide multiple read control signals 30 to the memory system thus allowing multiple simultaneous reads of the stored data 26.

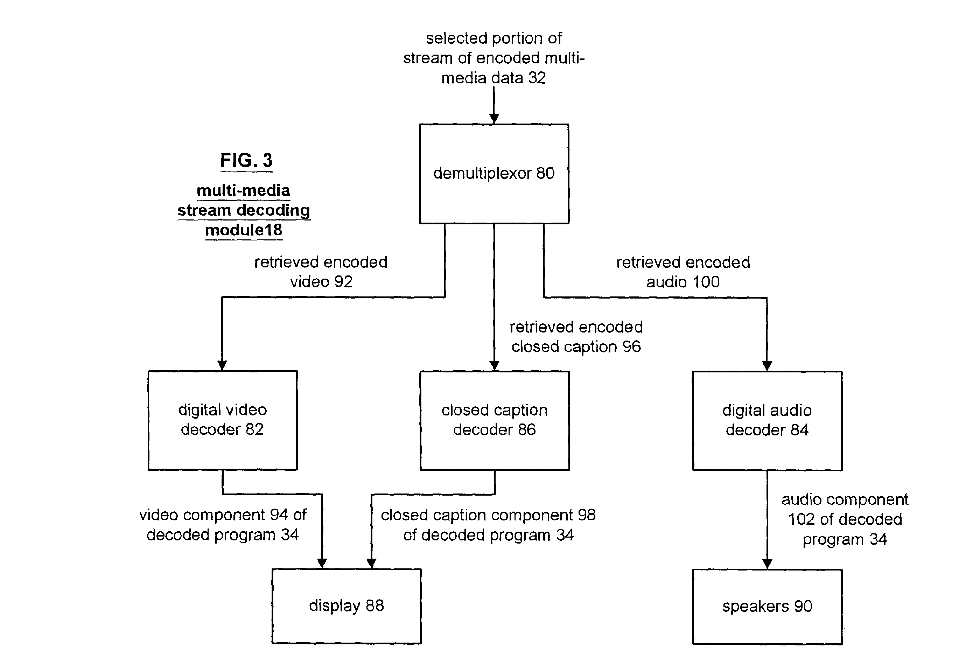

If a portion of the stored data is to be displayed on a television set, a selected portion of the stream of encoded multimedia data 32 is retrieved from memory system 14 and provided to a multimedia stream decoding module 18. The multimedia stream decoding module 18, which will be described in greater detail with reference to Figure 3, produces a decoded program 34 from the retrieved data. The decoded program 34 may include a video component and audio component, and may optionally further include close caption component.

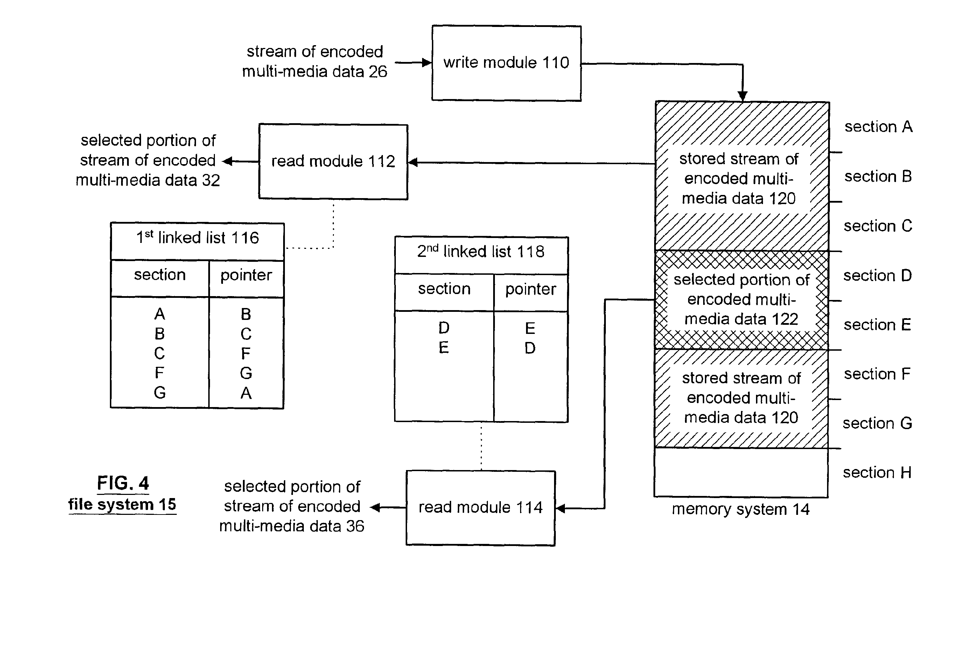

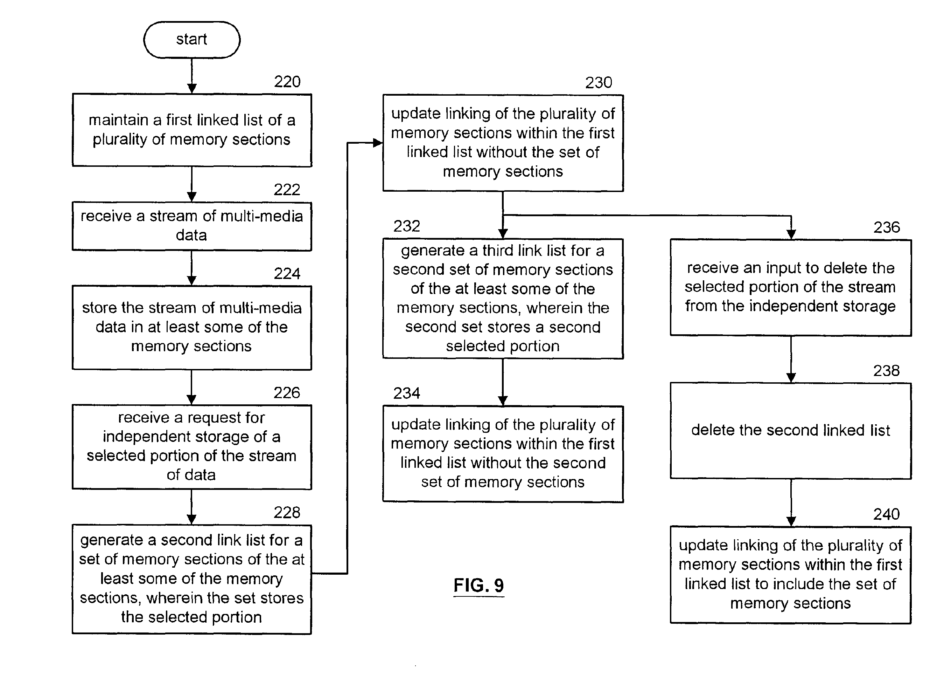

Alternatively, or simultaneously with the displaying of stored video data, the file management system 16 may provide a read control 30 that causes a selected portion of the stream of encoded multimedia data 36 to be provided to a multimedia archiving module 20. The archiving module 20 receives the data 36 and causes it to be stored in a storage medium 22. The storage medium 22 may be a hard drive of a personal computer, RAM of a personal computer, floppy disk, or any particular digital storage medium. Further, the storage medium 22 may include the memory system 14, where the archived copy of the program is stored in the memory system 14. Such a storage technique will be described below with reference to Figures 4 and 9.

The elements of Figure 1 may be implemented as separate processing modules having associated memories or as a single processing module having an associated memory. Such a processing module may be a single processing device or a plurality of processing devices. A processing device may be a microprocessor, a microcontroller, digital signal processor, state machine, logic circuitry, and/or any device that manipulates signals (analog or digital) based on operational instructions. The associated memory(ies) stores the operational instructions executed by the corresponding processing module(s). Such a memory may be a single memory device or a plurality of memory devices. Such a memory device may be a random access memory, read-only memory, floppy disk memory, magnetic tape memory, hard drive memory, and/or any device that stores digital information.

The digital VCR of Figure 1 may further include an external multimedia stream archiving module that is operable coupled to receive a different selected portion of the stream of encoded multimedia data in accordance with a separate one of the multiple read operations. The multimedia stream archiving module would then save the selected portion on a designated external digital storage medium such as a zip drive, a read/write CD, external RAM, DVD. Alternatively, the external multimedia stream archiving module may save the program on a designated external analog storage medium. To do this, the retrieved data would first need to be decoded into an analog form. Such an analog storage media may be a video cassette. Note that the selected portion of the stream of encoded multimedia data 36 processed by the archiving module 20 may be a still frame or a plurality of frames making up an animated video image.

Figure 2 illustrates a schematic block diagram of the multimedia stream encoding module 12. The encoding module 12 includes a digital video encoder 40, a digital audio encoder 42, and may further optionally include one or more of a close-captioned encoder 44, a parental control encoder 46 and a copy protection encoder 48. The video encoder 40 is operable coupled to receive a video component 52 of the program input and to produce therefrom encoded video data 54. The video encoder 40 may utilize an MPEG encoding process such that the encoded video data 54 is a digital MPEG file.

The digital audio encoder 42 receives an audio component 56 of the program input and produces therefrom encoded audio data 58. The digital audio encoder 42 may perform an MPEG audio encoding function such that the encoded audio data 58 is encoded in accordance with the MPEG two standard.

If the encoding module 12 further includes a closed captioned encoder 44, the closed-captioned encoder 44 receives the closed-captioned component 60 of the program input and produces therefrom encoded closed-captioned data 62. Such may be done in accordance with the vertical blanking interval 21 of broadcast television and encoded utilizing the MPEG encoding standard.

If the encoding module 12 further includes a parental control encoder 46, the parental control encoder 46 receives a parental control component 64 and produces an encoded parental control 66. The parental control may include V chip programming information, motion picture rating information, and may further process a parent's selecting of the program. As such, the encoded parental control data 66 includes the appropriate settings that are stored with the encoded video and audio such that appropriate parental control is exercised with each replay of the stored video and audio data.

If the encoding module 12 further includes a copy protection encoder 48, the copy protection encoder 48 is operably coupled to receive a copy protection component 68 of the program input and to produce an encoded copy protection data 70. The copy protection may be included by the content provider of the video information that may restrict copying, prevent copying, and/or provide alternate copying options. If the copy protection indicates prevention of copying, the encoded copy protection data 70 will prevent the stream of encoded multimedia data 26 from being stored.

The encoding module 12 further includes multiplexor 50 which is operably coupled to receive the encoded video data 54, the encoded audio data 58, and is further optionally coupled to receive the encoded close captioned data 62, the parental control data 66 and the encoded copy protection data 70. Multiplexor 50 combines the signals into a stream of encoded multimedia data 26.

Figure 3 illustrates a schematic block diagram of the multimedia stream decoding module 18. The decoding module 18 includes a de-multiplexor 80, a digital video decoder 82, a closed-captioned decoder 86, and an digital audio decoder 84. The de-multiplexor 80 is operably coupled to receive a selected portion of the stream of encoded multimedia data 32 from the file system 15. The de-multiplexor 80 separates the stream of data 32 into encoded video 92, encoded closed-caption 96 and encoded audio 100.

The digital video decoder 82 is operably coupled to receive the encoded video 92 and produce a video component 94 of the decoded program. The video decoder 82 may utilize an MPEG decoding scheme such that the encoded video 92 is stored in an MPEG format and is decoded into analog video component 94. The video component 94 is provided to a display 88. The display 88 may be a television, a monitor, a CRT, and/or a LCD display.

The closed-captioned decoder 86 receives the encoded closed-captioned data 96 and produces a closed captioned component 98 of the decoded program 34. The encoded closed-captioned data may be a simple text file that is subsequently passed as the closed-captioned component 98 or may be encrypted which would require decryption or any other known type of storage of text information. The closed-captioned component 98 is provided to display 88, which is subsequently viewed.

The digital audio decoder 84 is operably coupled to receive encoded audio 100 which may be encoded in accordance with the MPEG standard. The digital audio decoder 84 decodes the MPEG encoded audio data 100 and produces therefrom an analog audio component 102. The analog audio component is provided to speakers 90. The speakers may include a preamplifier stage, which amplifies the audio component 102 to provide the appropriate volume levels.

Figure 4 illustrates an operational representation of the file system 15. The file system 15 includes the file management 16 and memory system 14. The file management system 16 includes a write module 110 and read modules 112 and 114. The file management system 116 further includes a plurality of link lists 116 and 118. As shown, the memory system is divided into a plurality of sections where each section stores a portion of the encoded multimedia data. As shown, sections A through C and F and G store the stream of encoded multimedia data 120. Sections D & E store a selected portion of the encoded multimedia data 122. In this example, the user has desired that a portion of the encoded data be selected and retrieved for archiving. The write module 110 coordinates the writing of the stream of encoded multimedia data 26 into the memory system 14 and controls the updating of the first link list 116 as data is written into new memory sections. The first link list 116 maintains a link list of the memory sections that are storing the multimedia data 26 in a circular buffer fashion. As such, when the user desires a particular portion of the stream of encoded data to be viewed, the read module 112 utilizes the first link list to output the selected portion of the multimedia data 32. If the user desires to output an archive portion of the multimedia data 36, the read module 112 would access the second link list which would cause the archived portion to be provided to the displays.

The first link list 116 shows that the stored multimedia data 120 is stored in sections A, B, C, F & G. The pointer field of the linked list points to the next section in the link list. As shown, section A has a pointer to Section B, B has a pointer to Section C, C has a pointer to Section F, F has a pointer to Section G and G has a pointer to Section A such that a circular buffer is obtained.

The second link list 118 stores a link list of memory sections that are storing the selected portion of the encoded multimedia data 122 as a permanent copy of the selected portion, e.g., a selected program. In this example only Sections D and E store the selected portion. As such, the second link list includes a circular buffer for sections D and E. The read module 114 utilizes the second link list 118 to retrieve the selected portion of the stream of encoded multimedia data 36 from the memory system, which is subsequently provided to the storage medium.

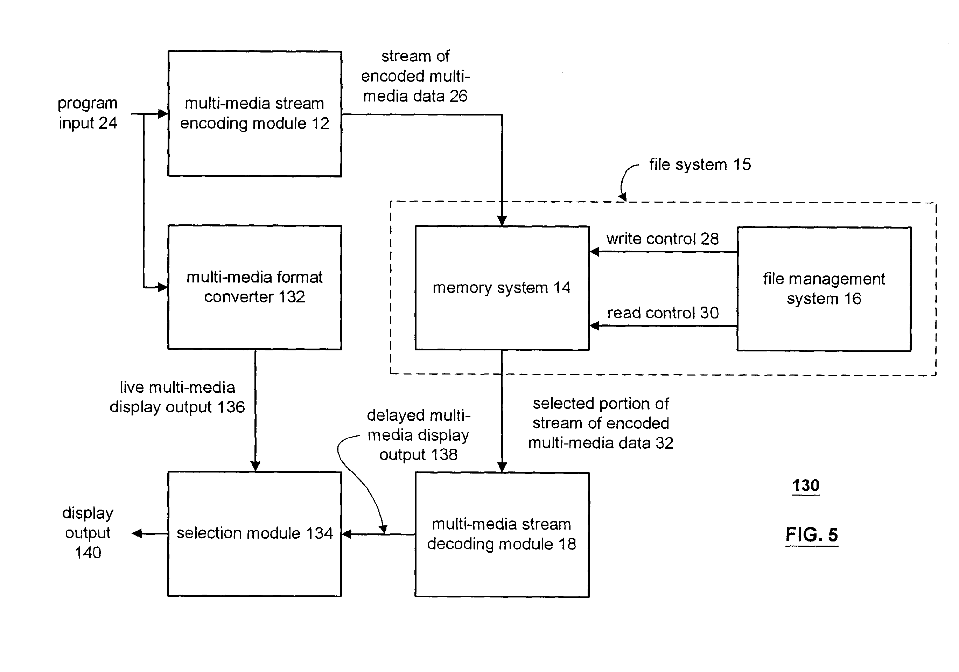

Figure 5 illustrates a schematic block diagram of an alternate digital video recorder in accordance with the present invention. The digital video recorder 130 includes the multimedia stream encoding module 12, the file system 15, the multimedia stream decoding module 18, a multimedia format converter 132 and a selection module 134. The multimedia format converter 132 is operably coupled to receive the program input 24 and to produce a live multimedia display output 136. The multimedia format converter may include a video capture module operably coupled to capture the program input to produce a stored program input. The format converter 132 may also include a video decoder operably coupled to digitize the stored program input into a video graphics signal and a digital audio signal. For example, the multimedia format converter 132 may include similar circuitry as the TV encoder portion of the All-In-Wonder Board (Trade Mark) produced by the ATI Technologies.

The selection module 134 is operably coupled to receive the live multimedia display output 136 and the delayed multimedia display output 138. Note that the displayed delayed multimedia display output 138 is similar to the decoded program 134 produced by digital VCR 10 of Figure 1. The selection module selects either the live multimedia display data 136 or the delayed multimedia display output 138 in a variety of ways. In one manner, the selection module 134 includes an auto selecting module that enables the outputting of the live multimedia display output when the delayed multimedia display output is near in time to the live multimedia display output. Near in time may be within a few seconds that corresponds to the time it takes to receive the program input 24 and to produce the delayed multimedia display output 138. By utilizing the live output as opposed to the stored digital output, video and audio quality is enhanced since it goes through less conversions. In the alternative, when the delayed multimedia display is not near in time to the live multimedia display output, the selection module outputs the delayed multimedia display output. As a further alternative, the selection module may receive an input that receives a user selection to enable the outputting of the live multimedia display output or the delayed multimedia display output.

Note that the components of the digital VCR 130 that have the same reference number of the components of the digital VCR 10 of Figure 1 function in the same manner and thus will not be described in detail.

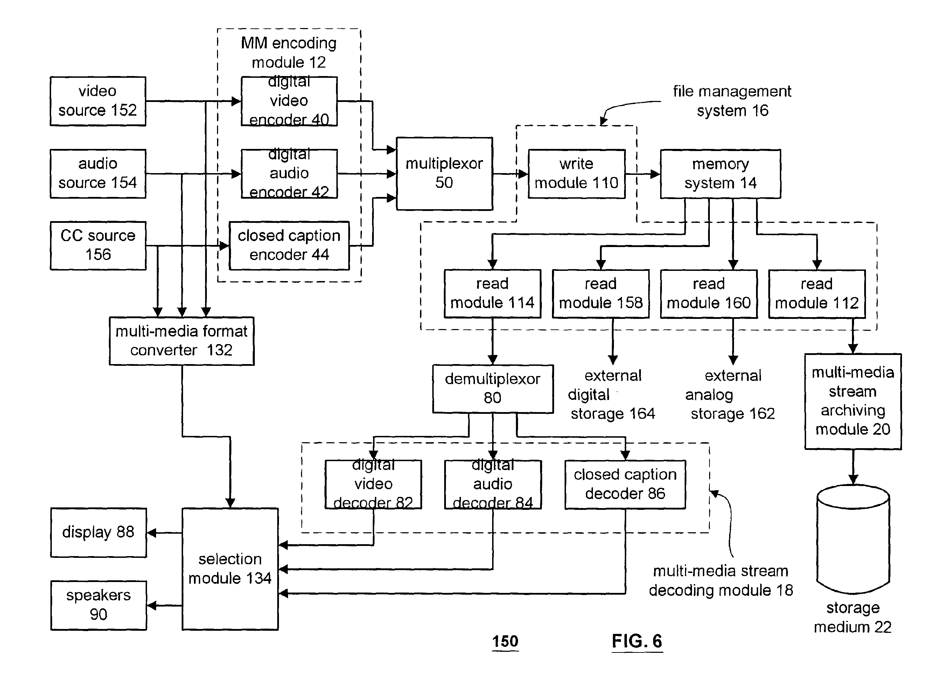

Figure 6 illustrates a schematic block diagram of an alternate digital VCR 150. The digital VCR 150 includes many of the elements of digital VCR 10 and digital VCR 130. As such, the elements of the digital VCR 10 or digital VCR 130 that are included in digital VCR 150 will not be discussed in detail. Digital VCR 150 includes, within the file management system 16 read modules 158 and 160. Read module 158 retrieves a portion of the encoded data stored in memory system 14 and provides it to an external digital storage device 164. Such a digital storage device may be a read-write CD, a DVD, etc. Read module 160 retrieves encoded data from memory system 14 and provides it to an external analog digital storage device 162. Such an external analog storage device may be a video cassette recorder. In this instance, the read module 160 would process the data through a decoder such that the output is in analog form.

The multimedia encoding module 12 is operably coupled to receive video signals to a video source 152, audio signals from an audio source 154 and close caption signals from a close caption source 156. Sources 152 through 156 may be a single source of a television broadcast, etc.

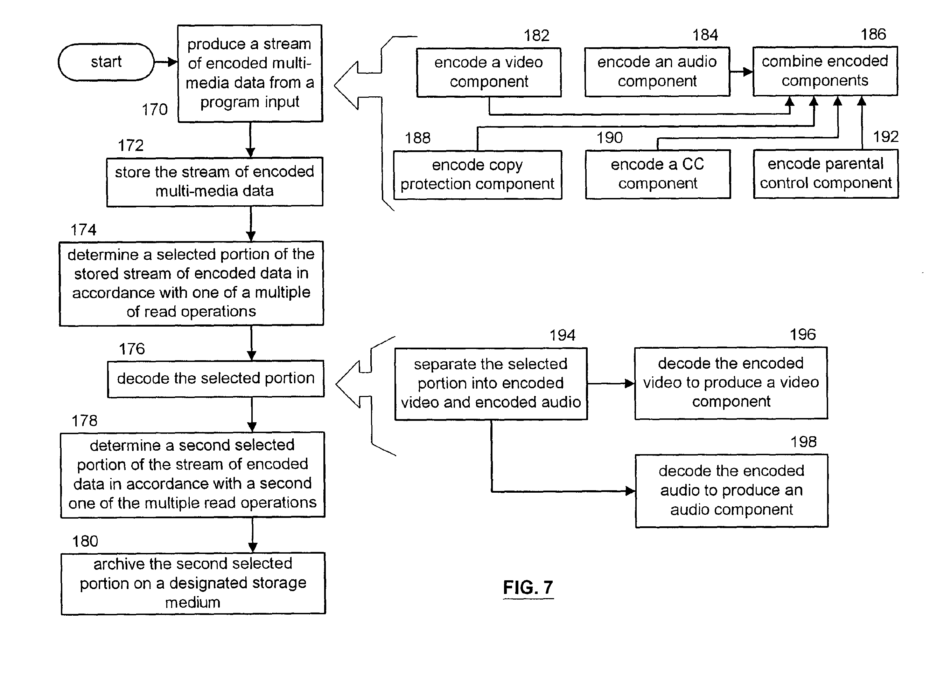

Figure 7 illustrates a logic diagram of a method for processing multimedia data within a digital VCR. The process begins at step 170 where a stream of encoded multimedia data is produced from a program input. Such processing may be further described with reference to steps 182 through 192. Steps 182, 184, 188, 190 and 192 encode a video component, audio component, copy production component, close caption component, and/or a parental control component of the program input, respectively. The encoding process may be in accordance with the MPEG 2 standard or any method for digitizing audio and/or video information. The encoded components are then combined at step 186 to produce the stream of multimedia data.

Returning to the main flow of Figure 7, the process proceeds to step 172, where the stream of encoded multimedia data is stored within the memory system. The process then proceeds to step 174 where a selected portion of the stored stream of encoded data is determined in accordance with one of a multiple read operations. The read operations are initiated by the user of the system to view a particular program or portion thereof.

The process then proceeds to step 176 where the selected portion is decoded. The decoding may be done in accordance with steps 194 through 198. At step 194 the selected portion of the stream of encoded multimedia data is separated into encoded video data and encoded audio data. The process then simultaneous proceeds to step 196 and 198. At step 196 the encoded video data is decoded to produce a video component. At step 198 the encoded audio data is decoded to produce an audio component.

Returning to the main flow of Figure 7, the process proceeds to step 178 where a second selected portion of the stream of encoded data is determined in accordance with a second one of the multiple read operations. In this instance, the user has opted to store, in an independent storage, at least a portion of the program as identified as the second selected portion. Note that the second selected portion may be a still frame or a plurality of images that make up animated video. The process then proceeds to step 180 where the second selected portion is archived on a designated storage medium. The processing of Figure 7 may further include, but not shown, determining a third selected portion of the stream of encoded multimedia data in accordance with a third one of the multiple read operations and archiving the third selected portion on a designated external digital storage medium. As an alternative, the third selected portion may be decoded to produce a decoded selected program portion and archived on a designated external analog storage medium.

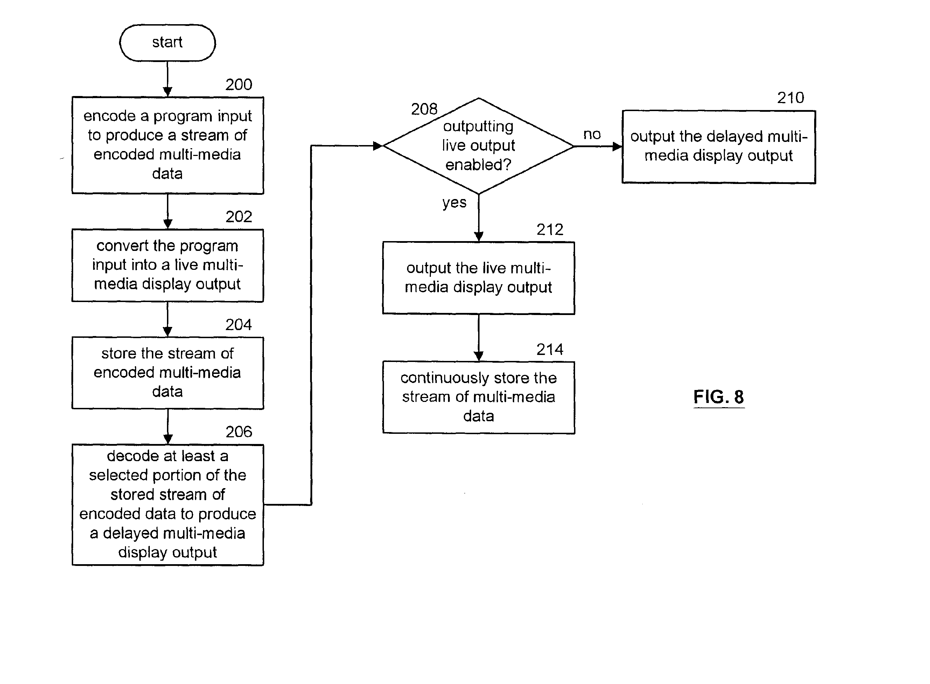

Figure 8 illustrates a logic diagram of a method for processing multimedia data as either live or delayed data. The process begins at step 200 where a program input is encoded to produce a stream of encoded multimedia data. The encoded multimedia data may be stored as a stored program input and digitized to produce a video graphics signal and a digital audio signal. The process then proceeds to step 202 where the program input is converted into a live multimedia display output. Such a conversion process may be done in accordance with the circuitry found in the TV encoder of the All-in-Wonder Board (Trade Mark) produced and manufactured by ATI Technologies. The process then proceeds to step 204 where a stream of multimedia data is stored.

The process then proceeds to step 206 where at least a selected portion of the stored stream of encoded data is decoded to produce a delayed multimedia display output. The process then proceeds to step 208 where a determination is made as to whether the outputting of live data is enabled. The determination may be based on an automated process that outputs the live multimedia display output when the delayed multimedia display output is near in time to the live multimedia display output. Alternatively, if the delayed multimedia display output is not near in time to the live multimedia display output, the process automatically outputs the delay multimedia display output. Note that in time corresponds to essentially the time it takes to receive the program input and produce the delayed multimedia display output. As such, if the user is watching the program in real time, there is no need to display the stored image, which may have a degraded video and/or audio quality. Alternatively, the enablement of the live output may be determined based on a user input.

If the live output is enabled, the process proceeds to step 212 where the live multimedia display output is outputted. In addition, the process proceeds to step 214 where the multimedia data is continuously stored. By continuously storing the data, the digital VCR of the present invention allows for live images to be displayed and stored which is not available in currently marketed VCRs. If, however, the live output is not enabled the process proceeds to step 210. At step 210 the delayed multimedia display output is outputted.

Figure 9 illustrates a logic diagram for maintaining a file system for use by a digital VCR. The process begins at step 220 where a first link list of a plurality of memory sections is maintained. The first link list includes the identity of memory sections in a circular buffer fashion. The process then proceeds to step 222 where a stream of multimedia data is received. The process then proceeds to step 224 where the stream of multimedia data is stored in at least some of the memory sections. This was illustrated with an example as shown in Figure 4. The process then proceeds to step 226 where a request for independent storage of a selected portion of the stream of data is received. The process then proceeds to step 228 where a second link list for a set of memory sections that store the selected portion is generated. The process then proceeds to step 230 where the first link list is updated to remove the set of memory sections that store the selected portion.

The process then proceeds simultaneously or in the alternative to steps 232 and 234 or to steps 236 through 240. At step 232 a third link list is generated for a second set of memory sections of the at least some of the memory sections. The second set of memory sections stores a second selected portion of the stream of multimedia data. As such, the user has selected another portion of the stored information to be independently stored for permanent storage. The process then proceeds to step 234 where the first link list is updated to remove the second set of memory sections.

At step 236 an input is received to delete the selected portion of the stream of multimedia data from the independent storage. The process then proceeds to step 238 where the second link list is deleted. The process then proceeds to step 240 where the first link list is updated to include the set of memory sections.

The preceding discussion has presented a method and apparatus for a digital VCR having enhanced features. As such, the user of the digital VCR in accordance with the present invention may view live video files simultaneously storing it. Store and retrieve still images, utilize less memory, etc. As one of average skill in the art would appreciate other embodiments may be derived from the teachings of the present invention without deviating from the scope of the claims.

## Claims

1. A multi-media system comprising:
a multi-media stream encoding module (12) operably coupled to receive a program input (24) and to produce therefrom a stream of encoded multi-media data (26);
a memory system (14) operably coupled to store the stream of encoded multi-media data (26);
a file management system (16) operably coupled to the memory system (16), wherein the file management system coordinates a single write of the stream of encoded multi-media data (26) into the file system (15) and wherein the file management system (16) coordinates multiple read operations of selected portions of the stream of encoded multi-media data from the file system (15);
a multi-media stream decoding module (18) operably coupled to receive a selected portion (38) of the stream of encoded multi-media data in accordance with one of the multiple read operations, wherein the multi-media stream decoding module (18) decodes the selected portion (32) to produce a decoded program; and
a multi-media stream archiving module (20) operably coupled to receive a second selected portion (36) of the stream of encoded multi-media data in accordance with a second one of the multiple read operations, wherein the multi-media stream archiving module (20) saves the second selected portion (36) on a designated storage medium (22).

2. The multi-media system of Claim 1, wherein the multi-media stream encoding module (12) comprises:
a digital video encoder (40) operably coupled to receive a video component of the program input (52) and to produce therefrom encoded video (54);
a digital audio encoder (42) operably coupled to receive an audio component of the program input (56) and to produce therefrom encoded audio (58); and
a multiplexor (50) operably coupled to combine the encoded video (54) and the encoded audio (58) into the stream of encoded multi-media data (26).

3. The multi-media system of Claim 2, wherein the multi-media stream encoding module (12) further comprises at least one of:
a closed caption encoder (44) operably coupled to receive a closed captioned component of the program input (60) and to produce therefrom encoded closed caption (62);
a parental control encoder (46) operably coupled to receive a parental control component of the program input (64) and to produce therefrom encoded parental control (66); and
a copy protection encoder (48) operably coupled to receive a copy protection component of the program input (68) and to produce therefrom encoded copy protection (70), wherein the multiplexor (50) is further operably coupled to combine at least one of the encoded closed captioned (62), encoded parental control (66), and the encoded copy protection (70) with the encoded video (54) and the encoded audio (58) to produce the stream of encoded multi-media data (26).

4. The multi-media system of any one of the preceding claims, wherein the file management system (16) further comprises:
a file write module (110) operably coupled to process writing of the stream of encoded multi-media data (26) into the file system (15);
a first file read module (112) operably coupled to process the one of the multiple read operations to retrieve the selected portion (32) of the stream of encoded multi-media data; and
a second file read module (114) operably coupled to process the second one of the multiple read operations to retrieve the second selected portion (36) of the stream of encoded multi-media data.

5. The multi-media system of any one of the preceding claims, wherein the multi-media stream archiving module (12) is operably coupled to archive the second selected portion (36) in the file system (15).

6. The multi-media system of any one of the preceding claims, and comprising:
an external multi-media stream archiving module operably coupled to receive a further selected portion of the stream of encoded multi-media data in accordance with a further one of the multiple read operations, wherein the multi-media stream archiving module saves the said further selected portion on a designated external digital storage medium (164).

7. The multi-media system of any one of the preceding claims, and comprising:
an external multi-media stream archiving module operably coupled to receive a further selected portion of the stream of encoded multi-media data in accordance with a further one of the multiple read operations, wherein the external multi-media stream archiving module decodes the said further selected portion to produce a decoded selected program portion; and wherein the multi-media stream archiving module saves the decoded selected program portion on a designated external analog storage medium (162).

8. The multi-media system of any one of the preceding claims, wherein the second selected portion of the stream of multi-media data further comprises at least one still frame.

9. The multi-media system of any one of the preceding claims, wherein the multi-media decoding module (18) further comprises:
a de-multiplexor (80) operably coupled to separate the selected portion (32) into encoded video (92) and encoded audio (100);
a digital video decoder (82) operably coupled to receive the encoded video (92) and to produce therefrom a video component (94) of the decoded program (34); and
a digital audio decoder (84) operably coupled to receive the encoded audio (100 and to produce therefrom an audio component (102) of the decoded program (34).

10. The multi-media system of any one of the preceding claims, further comprising a multi-media format converter (132) for producing a multi-media display output (136) from the program input (24), and a selector (134) for selecting the multi-media display output (136) from the format converter (132) or the multi-media display output (138) from the multi-media stream decoding module (18) as a display output (140).

11. A method for processing multi-media data, the method comprises the steps of:
a) producing a stream of encoded multi-media data (26) from a program input (24);
b) storing the stream of encoded multi-media data (26) to produce stored multi-media data;
c) determining a selected portion (32) of the stored stream of encoded multi-media data in accordance with one of a multiple read operations of the stored multi-media data;
d) decoding the selected portion to produce a decoded program (34);
e) determining a second selected portion (36) of the stream of encoded multi-media data in accordance with a second one of the multiple read operations of the stored multi-media data; and
f) archiving the second selected portion on a designated storage medium (22).

12. The method of Claim 11, wherein step (a) further comprises:
encoding a video component of the program input (52) to produce encoded video (54);
encoding an audio component of the program input (56) and to produce encoded audio (58); and
combining the encoded video and the encoded audio into the stream of encoded multi-media data (26).

13. The method of Claim 12 further comprising encoding at least one of:
a closed captioned component of the program input (60) to produce encoded closed caption (62);
a parental control component of the program input (64) to produce encoded parental control (66);
a copy protection component of the program input (68) to produce encoded copy protection (70); and
combining the at least one of the encoded closed captioned (62), encoded parental control (66), and the encoded copy protection (70) with the encoded video (54) and the encoded audio (56) to produce the stream of encoded multi-media data (26).

14. The method of any one of Claims 11 to 13, further comprising:
determining a further selected portion of the stream of encoded multi-media data in accordance with a further one of the multiple read operations; and
archiving the said further selected portion on a designated external digital storage medium (164).

15. The method of any one of Claims 11 to 14, further comprising:
determining a further selected portion of the stream of encoded multi-media data in accordance with a further one of the multiple read operations;
decoding the said further selected portion to produce a decoded selected program portion; and
archiving the decoded selected program portion on a designated external analog storage medium (162).

16. The method of any one of Claims 11 to 15, wherein the second selected portion of the stream of multi-media data further comprises at least one still frame.

17. The method of any one of Claims 11 to 16, wherein the decoding the selected portion to produce a decoded program further comprises:
separating the selected potion into encoded video (92) and encoded audio (100);
decoding the encoded video (92) to produce a video component (94) of the decoded program (34); and
decoding the encoded audio to produce an audio component (102) of the decoded program (34).

18. An apparatus for processing multi-media data, the apparatus comprises:
a processing module; and
memory operably coupled to the processing module, wherein the memory includes operational instructions that cause the processing module to (a) produce a stream of encoded multi-media data (26) from a program input (24); (b) store the stream of encoded multi-media data to produce stored multi-media data (26); (c) determine a selected portion of the stored stream of encoded multi-media data (32) in accordance with one of a multiple read operations of the stored multi-media data; (d) decode the selected portion to produce a decoded program (34); (e) determine a second selected portion of the stream of encoded multi-media data (36) in accordance with a second one of the multiple read operations of the stored multi-media data; and (f) archive the second selected portion (36) on a designated storage medium (22).

19. The apparatus of Claim 18, wherein the memory further comprises operational instructions that cause the processing module to decode the selected portion by:
encoding a video component of the program input (52) to produce encoded video (54);
encoding an audio component of the program input (56) and to produce encoded audio (58); and
combining the encoded video (54) and the encoded audio (58) into the stream of encoded multi-media data (26).

20. The apparatus of Claim 19, wherein the memory further comprises operational instructions that cause the processing module to encode one or more of:
a closed captioned component of the program input (60) to produce encoded closed caption (62);
a parental control component of the program input (64) to produce encoded parental control (66); and
a copy protection component of the program input (68) to produce encoded copy protection (70); and to
combine the at least one of the encoded closed captioned (62), encoded parental control (66), and the encoded copy protection (70) with the encoded video (54) and the encoded audio (56) to produce the stream of encoded multi-media data (26).

21. The apparatus of any one of Claims 18 to 20, wherein the memory further comprises operational instructions that cause the processing module to:
determine a further selected portion of the stream of encoded multi-media data in accordance with a further one of the multiple read operations; and
archive the said further selected portion on a designated external digital storage medium (164).

22. The apparatus of any one of Claims 18 to 21, wherein the memory further comprises operational instructions that cause the processing module to:
determine a further selected portion of the stream of encoded multi-media data in accordance with a further one of the multiple read operations;
decode the said further selected portion to produce a decoded selected program portion; and
archive the decoded selected program portion on a designated external analog storage medium (162).

23. The apparatus of any one of Claims 18 to 22, wherein the second selected portion of the stream of multi-media data further comprises at least one still frame.

24. The apparatus of any one of Claims 18 to 23, wherein the memory further comprises operational instructions that cause the processing module to decode the selected portion by:
separating the selected portion into encoded video (92) and encoded audio (100);
decoding the encoded video (92) to produce a video component (94) of the decoded program (34); and
decoding the encoded audio (100) to produce an audio component (102) of the decoded program (34).
